(19) Europäisches Patentamt
European Patent Office
Office européen des brevets

(11) **EP 2 264 915 A2**

(12) **EUROPEAN PATENT APPLICATION**

(43) Date of publication:
**22.12.2010 Bulletin 2010/51**

(51) Int Cl.:
*H04B 7/10* (2006.01)          *H04B 7/06* (2006.01)
*H04B 7/08* (2006.01)          *H04B 7/04* (2006.01)

(21) Application number: **10166218.7**

(22) Date of filing: **16.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **17.06.2009   JP 2009144306**

(71) Applicant: **FUJITSU LIMITED**
**Kawasaki-shi,**
**Kanagawa 211-8588 (JP)**

(72) Inventor: **Yokoyama, Hitoshi**
**Kawasaki-shi Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **Reception apparatus, mobile equipment, communication system, and communication method**

(57)    A reception apparatus includes a receiver having respective antennas for receiving signals of different respective polarized wave surfaces, an estimation unit configured to estimate a propagation characteristic between the reception apparatus and a mobile equipment, a calculation unit configured to calculate at least one of weights of respective beam formings at which the signals received by the receiver are the respective polarized wave surfaces based on an estimation result of the estimation unit, and a transmitter configured to transmit the weight calculated by the calculation unit to the mobile equipment.

FIG. 1

**Description**

FIELD

Embodiments of the present invention relate to a reception apparatus for performing a wireless communication, a mobile equipment, a communication system, and a communication method.

BACKGROUND

As a spatial multiplexing technology for realizing a further effective utilization of a frequency in a wireless communication, MIMO (Multiple Input Multiple Output) has been studied (for example, see Japanese Unexamined Patent Application Publication No. 2004-80353 and Japanese Unexamined Patent Application Publication No. 2008-124974). The MIMO includes SU (Single User)-MIMO in which a single user equipment multiplexes a plurality of streams to be sent for improving a frequency utilization efficiency and MU (Multi User)-MIMO in which respective streams simultaneously sent by a plurality of user equipments are multiplexed.

Among the SU-MIMO and the MU-MIMO, it is known that the MU-MIMO has a high degree of freedom with respect to a propagation path space, and although a complexity in a control is increased, the frequency utilization efficiency is high. Also, in an uplink, transmission signals having the same frequency are received on a receiving end from a plurality of user equipments, and therefore an interference is generated between the streams. It is also known that in order to separate the respective transmission signals at a high accuracy, an extremely large calculation complexity is accompanied. As a method of separating the respective transmission signals, for example, SVD (Single Value Decomposition)-Assisted is exemplified (for example, see W. Liu, L. L. Yang, and L. Hanzo, "SVD-Assisted Multiuser Transmitter and Multiuser Detector Design for MIMO Systems", IEEE Transactions on Vehicular Technology, Vol. 58, No. 2, February 2009, pp. 1016-1021).

However, in the above-mentioned related art technology, a problem occurs in which a signal processing amount on the receiving end for separating the transmission signals from the respective mobile equipments is large. In particular, if the number of mobile equipments receiving the signals at the time on the receiving end is increased, the signal processing amount on the receiving end is increased at an exponential rate.

SUMMARY

Accordingly, it is desirable to provide a reception apparatus for performing a wireless communication, a mobile equipment, a communication system, and a communication method which may reduce a signal processing amount on a receiving end.

According to an aspect of the embodiments discussed herein, a reception apparatus includes a receiver including respective antennas for receiving signals of different respective polarized wave surfaces, an estimation unit configured to estimate a propagation characteristic between a mobile equipment, a calculation unit configured to calculate at least one of weights of respective beam formings at which the signals received by receiver are the respective polarized wave surfaces based on an estimation result of the estimation unit, and a transmitter configured to transmit the weight calculated by the calculation unit to the mobile equipment.

BRIEF DESCRIPTION OF DRAWINGS

FIG. 1 is a block diagram illustrating processing by a communication system according to an embodiment;
FIG. 2 illustrates a specific example of the communication system illustrated in FIG. 1;
FIG. 3 illustrates a simplified example of an antenna of a base station illustrated in FIG. 2;
FIG. 4 is a sequence diagram illustrating an example of an operation by the communication system illustrated in FIG. 2;
FIG. 5 illustrates a configuration example of the base station illustrated in FIG. 2;
FIG. 6 illustrates an example of processing by a calculation unit illustrated in FIG. 5;
FIG. 7 illustrates a configuration example of a user equipment in an embodiment;
FIG. 8 illustrates polarized wave surfaces of respective paths between a base station and the user equipments in an embodiment;
FIG. 9 illustrates another example of the processing by the calculation unit illustrated in FIG. 5;
FIG. 10 is a sequence diagram illustrating an example of a setting operation for a transmission cycle of a reference signal in an embodiment;
FIG. 11 illustrates a setting for a selection cycle based on a polarized wave fluctuation in an embodiment; and

FIG. 12 is a flow chart illustrating an example of a decision processing for the selection cycle based on a Doppler frequency in an embodiment.

DESCRIPTION OF EMBODIMENTS

Hereinafter, with reference to the drawings, embodiments of a reception apparatus, a mobile equipment, a communication system, and a communication method will be described in detail.

(Processing by communication system)

system 100 according to an embodiment includes a mobile equipment 110 and a reception apparatus 120. The mobile equipment 110 is an equipment such as a mobile phone capable of performing a mobile communication. The reception apparatus 120 is a communication apparatus such as a base station (BS) or a relay node (RN) for performing a wireless communication with the mobile equipment 110.

The mobile equipment 110 performs beam forming on a transmitted signal based on a weight transmitted by the reception apparatus 120. To be more specific, the mobile equipment 110 is provided with a transmitter 111, a receiver 112, and a multiplication unit 113. The transmitter 111 transmits a signal such as user data to the reception apparatus 120.

Also, the transmitter 111 may transmit a reference signal having a previously determined pattern to the reception apparatus 120. Also, the transmitter 111 includes a plurality of antennas and transmits respective signals weighted by the multiplication unit 113 from the respective antennas to perform the beam forming.

The receiver 112 receives a weight for the beam forming from the reception apparatus 120. The weight received by the receiver 112 is a weight for the beam forming at which the signal transmitted by the transmitter 111 is received by the reception apparatus 120 on respective polarized wave surfaces corresponding to the respective antennas of the reception apparatus 120. The receiver 112 outputs the received weight to the multiplication unit 113.

The multiplication unit 113 performs the beam forming on the signal transmitted by the transmitter 111 based on the weight output from the receiver 112. To be more specific, the multiplication unit 113 performs weighting on the respective signals transmitted from the respective antennas of the transmitter 111 based on the weight output from the receiver 112. The multiplication unit 113 may be realized, for example, by a computation circuit such as DSP (Digital Signal Processor).

The reception apparatus 120 has respective antennas for receiving signals of mutually different respective polarized wave surfaces. For example, the mutually different respective polarized wave surfaces are respective polarized wave surfaces orthogonal to each other. In the following description, it is supposed that the mutually different respective polarized wave surfaces are a V-polarized wave surface (vertical polarized wave surface) and an H-polarized wave surface (horizontal polarized wave surface) which are orthogonal to each other. The reception apparatus 120 calculates a weight for the beam forming at which the received signal is one of the V-polarized wave surface and the H-polarized wave surface based on a propagation characteristic (propagation path characteristic) with the mobile equipment 110 and transmits the calculated weight to the mobile equipment 110.

To be more specific, the reception apparatus 120 is provided with a receiver 121, an estimation unit 122, a calculation unit 123, and a transmitter 124. The receiver 121 including respective antennas for receiving signals of the mutually different respective polarized wave surfaces (herein, the V-polarized wave surface and the H-polarized wave surface) and receives signals (reference signal and user data) transmitted from the mobile equipment 110. The receiver 121 may output the received reference signal to the estimation unit 122.

The estimation unit 122 estimates a propagation characteristic between the reception apparatus 120 and the mobile equipment 110. For example, the estimation unit 122 estimates the propagation characteristic based on the reference signal output from the receiver 121. The estimation unit 122 notifies the calculation unit 123 of the estimated propagation characteristic (estimation result). The estimation unit 122 may be realized, for example, by a computation circuit such as the DSP.

The calculation unit 123 calculates the weight for the beam forming in the mobile equipment 110 based on the propagation characteristic notified from the estimation unit 122. To be more specific, the calculation unit 123 calculates one of the respective weights at which the signals received by the receiver 121 are the V-polarized wave surface and the H-polarized wave surface. Alternatively, the calculation unit 123 may calculate both of the respective weights at which the signals received by the receiver 121 are the V-polarized wave surface and the H-polarized wave surface.

The calculation unit 123 outputs the calculated weight to the transmitter 124. The calculation unit 123 may be realized, for example, by a computation circuit such as the DSP. The transmitter 124 transmits the weight output from the calculation unit 123 to the mobile equipment 110. With this configuration, the signal transmitted by the mobile equipment 110 may be received in a state of the V-polarized wave surface or the H-polarized wave surface in the reception apparatus 120.

(Specific example of communication system)

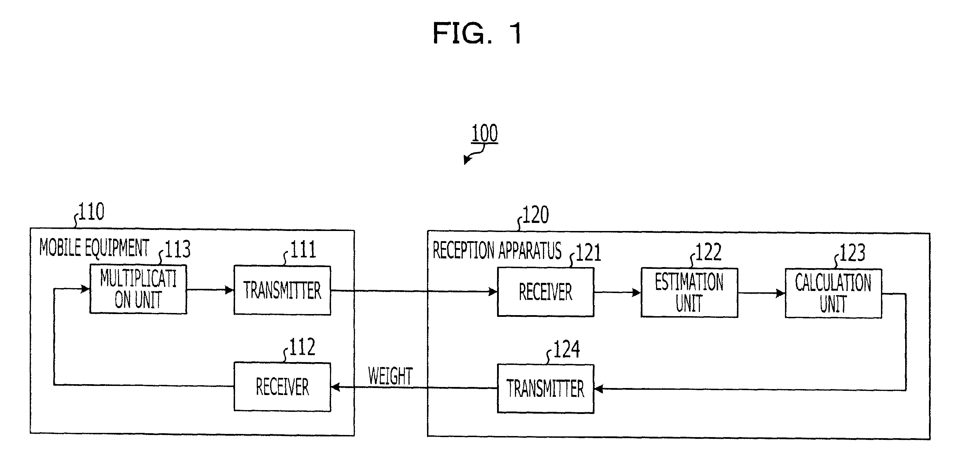

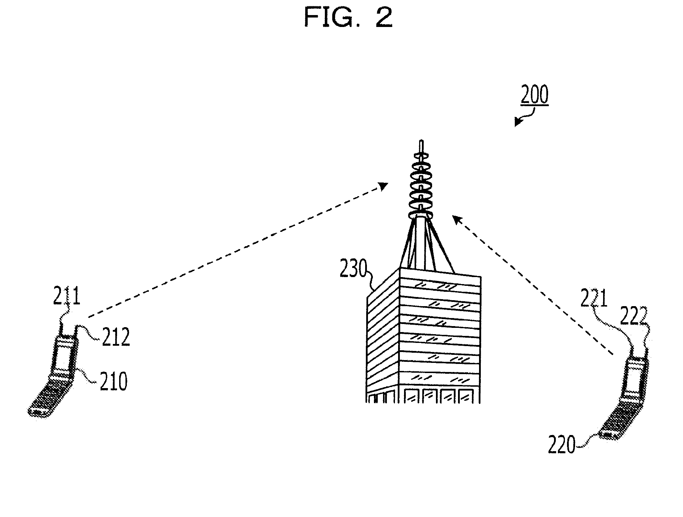

FIG. 2 illustrates a specific example of the communication system illustrated in FIG. 1. A communication system 200 illustrated in FIG. 2 is a specific example of the communication system 100 illustrated in FIG. 1. The communication system 200 includes a user equipment 210 (UE), a user equipment 220, and a base station 230. The mobile equipment 110 illustrated in FIG. 1 may be applied, for example, to each of the user equipment 210 and the user equipment 220. The reception apparatus 120 illustrated in FIG. 1 may be applied, for example, to the base station 230.

The user equipment 210 wirelessly transmits a signal to the base station 230. Also, the user equipment 210 has antennas 211 and 212 and performs the beam forming on the transmitted signal by the antennas 211 and 212. The user equipment 220 wirelessly transmits a signal to the base station 230. Also, the user equipment 220 has antennas 221 and 222 and performs the beam forming on the transmitted signal by the antennas 221 and 222.

The base station 230 is provided with a plurality of antennas, and respective communications of a communication between the user equipment 210 and the base station 230 and a communication between the user equipment 220 and the base station 230 are respectively performed based on the MIMO. For example, a case will be described in which the user equipment 210 and the user equipment 220 simultaneously transmit the signals to the base station 230.

For example, the base station 230 transmits the weight for the beam forming at which the signal received from the user equipment 210 is the V-polarized wave surface to the user equipment 210. Also, the base station 230 transmits the weight for the beam forming at which the signal received from the user equipment 220 is the H-polarized wave surface to the user equipment 220. In contrast to this, each of the user equipment 210 and the user equipment 220 transmits the signal, which is subjected to the beam forming based on the weight transmitted from the base station 230, to the base station 230.

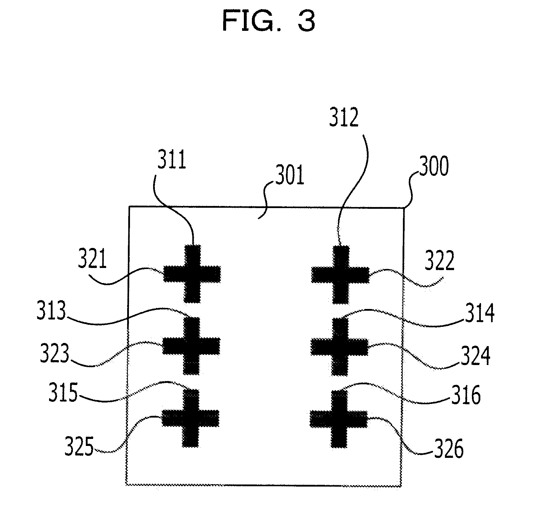

With this configuration, the base station 230 may receive the signals transmitted from the user equipment 210 by antennas for receiving the signals of the V-polarized wave surface (for example, the V-polarized wave antennas 311 to 316 in FIG. 3). Also, the base station 230 may receive the signals transmitted from the user equipment 220 by antennas for receiving the signals of the H-polarized wave surface (for example, H-polarized wave antennas 321 to 326 in FIG. 3).

Therefore, the base station 230 may receive the respective signals transmitted from the user equipment 210 and the user equipment 220 in a spatial multiplexing separation state. For this reason, it is possible to omit an interference MUI (Multi-User Interference) removal processing in the base station 230. Also, even when the number of user terminals which receive the signals at the same time is two or larger, the signals from the respective user equipments may be separated into the V-polarized wave surface and the H-polarized wave surface, and it is therefore possible to suppress the interference removal processing in the base station 230.

FIG. 3 illustrates a simplified example of an antenna of a base station illustrated in FIG. 2. The base station 230 illustrated in FIG. 2 is provided, for example, with an antenna unit 300 illustrated in FIG. 3. The antenna unit 300 is provided with a board part 301 for reinforcing the respective antenna units and the V-polarized wave antennas 311 to 316 and the H-polarized wave antennas 321 to 326 where feeding is carried out.

The V-polarized wave antennas 311 to 316 are arranged in a vertical direction and receive the signals of the V-polarized wave surface. The H-polarized wave antennas 321 to 326 are arranged in a horizontal direction and receive the signals of the H-polarized wave surface. A state is illustrated in which the V-polarized wave antenna 311 and the H-polarized wave antenna 321, the V-polarized wave antenna 312 and the H-polarized wave antenna 322, the V-polarized wave antenna 313 and the H-polarized wave antenna 323, etc., are mutually intersected but the respective antennas may not need to be mutually intersected.

Also, herein, the respective antennas for receiving the signals of the V-polarized wave surface and the H-polarized wave surface will be described, but the polarized wave surfaces received by the respective antennas are not limited to the V-polarized wave surface and the H-polarized wave surface. For example, a configuration may also be adopted in which the V-polarized wave antennas 311 to 316 and the H-polarized wave antennas 321 to 326 are respectively rotated by 45 degrees. Also, the respective polarized wave surfaces received by the respective antennas are not limited to a case of being completely orthogonal to each other but may be mutually different respective polarized wave surfaces at a degree where no interference occurs.

(Calculation for weight for beam forming)

Next, a description will be given of a state in which based on the estimated propagation characteristic, the weight for the beam forming at which the signal received in the base station 230 is the V-polarized wave surface or the H-polarized wave surface may be calculated. Herein, as illustrated in FIG. 2, the number of user terminals is set as 2 (the user equipments 210 and 220), the numbers of transmission antennas in the respective user equipments are respectively set as 2, and the numbers of streams of the respective user equipments are respectively set as 1. Also, the number of reception antennas of the base station 230 is set as 2 (for example, the V-polarized wave antenna 311 and the H-polarized wave antenna 321).

In the communication system 200 illustrated in FIG. 2, a reception signal of the base station 230 in an uplink in a case where attention is paid to a particular frequency may be represented by the following Expression (1).

$$y = HTx + n \cdots (1)$$

y denotes a vector indicating a reception signal (phase and amplitude) in the base station 230. H denotes a matrix representing a propagation characteristic (radio path) between the base station 230 and the respective user equipments. T denotes a matrix indicating a weight for the beam forming in the respective user equipments. $\times$ denotes a vector indicating a transmission signal from the respective user equipments. n denotes a vector indicating noise generated between the base station 230 and the respective user equipments. Reception signals of the V-polarized wave antenna 311 and the H-polarized wave antenna 321 may be represented, for example, by the following Expression (2).

$$\begin{bmatrix} y_1 \\ y_2 \end{bmatrix} = \begin{bmatrix} h_{111} & h_{112} & h_{121} & h_{122} \\ h_{211} & h_{212} & h_{221} & h_{222} \end{bmatrix} \begin{bmatrix} w_{11} & 0 \\ w_{12} & 0 \\ 0 & w_{21} \\ 0 & w_{22} \end{bmatrix} \begin{bmatrix} x_1 \\ x_2 \end{bmatrix} + \begin{bmatrix} n_1 \\ n_2 \end{bmatrix} \quad \cdots (2)$$

In the above-mentioned Expression (2), $y_m$ denotes a matrix indicating a reception signal in the reception antenna m of the base station 230. To be more specific, $y_1$ denotes a reception signal of the V-polarized wave antenna 311 which receives a signal of the V-polarized wave surface in the base station 230. Also, $y_2$ denotes a reception signal of the H-polarized wave antenna 321 which receives a signal of the H-polarized wave surface in the base station 230.

"$h_{mkn}$" denotes a propagation characteristic from the transmission antenna n of the user equipment k to the reception antenna m of the base station 230. For example, $h_{111}$ denotes a propagation characteristic from the antenna 221 of the user equipment 210 to the V-polarized wave antenna 311 of the base station 230. Also, $h_{222}$ denotes a propagation characteristic from the antenna 222 of the user equipment 220 to the H-polarized wave antenna 321 of the base station 230.

"$W_{kn}$" denotes a weight for the beam forming, which is a weight by which a transmission signal of the transmission antenna n of the user equipment k is multiplied. For example, $w_{11}$ is a weight by which a transmission signal of the antenna 221 of the user equipment 210 is multiplied. $W_{kn}$ has a limitation of $|w_{kn}|^2 = 1$. $x_k$ denotes a transmission signal of a user equipment k. For example, $x_1$ denotes a transmission signal of the user equipment 210. $n_m$ denotes noise in the reception antenna m of the base station 230.

When the above-mentioned Expression (2) is separated for each user equipment, this state is represented by the following Expression (3).

$$\begin{bmatrix} y_1 \\ y_2 \end{bmatrix} = \begin{bmatrix} h_{111} & h_{112} & 0 & 0 \\ h_{211} & h_{212} & 0 & 0 \end{bmatrix} \begin{bmatrix} w_{11} & 0 \\ w_{12} & 0 \\ 0 & 0 \\ 0 & 0 \end{bmatrix} \begin{bmatrix} x_1 \\ 0 \end{bmatrix} + \begin{bmatrix} 0 & 0 & h_{121} & h_{122} \\ 0 & 0 & h_{221} & h_{222} \end{bmatrix} \begin{bmatrix} 0 & 0 \\ 0 & 0 \\ 0 & w_{21} \\ 0 & w_{22} \end{bmatrix} \begin{bmatrix} 0 \\ x_2 \end{bmatrix} + \begin{bmatrix} n_1 \\ n_2 \end{bmatrix}$$

$$= \{UE_1\} + \{UE_2\} + \begin{bmatrix} n_1 \\ n_2 \end{bmatrix} \quad \cdots (3)$$

In the above-mentioned Expression (3), a case is illustrated in which the transmission of the user equipment 210 is received by the V-polarized wave antenna 311 of the base station 230, and the transmission of the user equipment 220 is received by the H-polarized wave antenna 321 of the base station 230. In the above-mentioned Expression (3), an item $y_1$ related to indicating the reception signal of the V-polarized wave antenna 311 may be expanded as illustrated in the following Expression (4).

$$\begin{bmatrix} y_1 \\ 0 \end{bmatrix} = \{UE_1\} + \begin{bmatrix} n_1 \\ 0 \end{bmatrix} = \begin{bmatrix} h_{111} & h_{112} & 0 & 0 \\ h_{211} & h_{212} & 0 & 0 \end{bmatrix} \begin{bmatrix} w_{11} & 0 \\ w_{12} & 0 \\ 0 & 0 \\ 0 & 0 \end{bmatrix} \begin{bmatrix} x_1 \\ 0 \end{bmatrix} + \begin{bmatrix} n_1 \\ 0 \end{bmatrix}$$

$$= \begin{bmatrix} h_{111} & h_{112} \\ h_{211} & h_{212} \end{bmatrix} \begin{bmatrix} w_{11} \\ w_{12} \end{bmatrix} x_1 + \begin{bmatrix} n_1 \\ 0 \end{bmatrix} \qquad \cdots \text{(4)}$$

Through the above-mentioned Expression (4), a weight at which a response of the H-polarized wave surface of the transmission signal from the user equipment 210 becomes 0 in the base station 230 may be calculated by the following Expression (5).

$$0 = h_{211}w_{11} + h_{212}w_{12} \cdots \text{(5)}$$

Similarly, a weight at which a response of the V-polarized wave surface of the transmission signal from the user equipment 220 becomes 0 in the base station 230 may be calculated by the following Expression (6).

$$0 = h_{121}w_{21} + h_{122}w_{22} \cdots \text{(6)}$$

In the above-mentioned Expression (5) and Expression (6), main parameters are four including $h_{211}$, $h_{212}$, $h_{121}$, and $h_{122}$, and variables are four including $w_{11}$, $w_{12}$, $w_{21}$, and $w_{22}$. For this reason, $w_{11}$, $w_{12}$, $w_{21}$, and $w_{22}$ satisfying the above-mentioned Expression (5) and Expression (6) may be calculated. Then, the calculated $w_{11}$ and $w_{12}$ are used for the beam forming in the user equipment 210, and the calculated $w_{21}$ and $w_{22}$ are used for the beam forming in the user equipment 220.
For example, the user equipment 210 multiplies the signal transmitted from the antenna 211 by $w_{11}$ and also multiplies the signal transmitted from the antenna 212 by $w_{12}$. Also, the user equipment 220 multiplies the signal transmitted from the antenna 221 by $w_{21}$ and also multiplies the signal transmitted from the antenna 222 by $w_{22}$.
With this configuration, the transmission signal from the user equipment 210 is received on the V-polarized wave surface by the base station 230, and the transmission signal from the user equipment 220 may be received on the H-polarized wave surface by the base station 230. For this reason, as the transmission signal from the user equipment 210 may be received by the V-polarized wave antenna 311 and the transmission signal from the user equipment 220 may be received by the H-polarized wave antenna 321, the respective transmission signals may be received in the spatial multiplexing separation state.
Herein, as illustrated in FIG. 2 and FIG. 3, the example has been described in which the number of user terminals is set as 2, the numbers of the transmission antennas of the respective user equipments are respectively set as 2, the stream numbers of the respective user equipments are respectively set as 1, and the number of the reception antennas of the base station 230 is set as 2. Next, as another example, a case will be described in which the number of user terminals is set as 4, the transmission antennas of the respective user equipments are respectively set as 3, the stream numbers of the respective user equipments are respectively set as 1, and the number of the reception antennas of the base station 230 is set as 4. The reception antennas of the base station 230 are supposed to be the V-polarized wave antennas 311 and 312 and the H-polarized wave antennas 321 and 322 illustrated in FIG. 3.
When the above-mentioned Expression (2) is separated for each user equipment, this case is represented by the following Expression (7).

$$y = HTx + n = \{UE_1\} + \{UE_2\} + \{UE_3\} + \{UE_4\} + n \cdots \text{(7)}$$

Herein, a case will be described in which transmission signals from odd-numbered user equipments ($UE_1$ and

UE$_3$) are received on the V-polarized wave surface, and transmission signals from the even-numbered user equipments (UE$_2$ and UE$_4$) are received on the H-polarized wave surface. Also, in the base station 230, a reception signal in the V-polarized wave antenna 311 is set as $y_1$, a reception signal in the V-polarized wave antenna 312 is set as $y_2$, a reception signal in the H-polarized wave antenna 321 is set as $y_3$, and a reception signal in the H-polarized wave antenna 322 is set as $y_4$. In this case, $y_1$ and $y_2$ may be represented by the following Expression (8).

$$\begin{bmatrix} y_1 \\ y_2 \\ y_3 \\ y_4 \end{bmatrix} = \begin{bmatrix} y_1 \\ y_2 \\ 0 \\ 0 \end{bmatrix} = \{UE_1\} + \{UE_3\} + \begin{bmatrix} n_1 \\ n_2 \\ 0 \\ 0 \end{bmatrix}$$

$$= \begin{bmatrix} h_{111} & h_{112} & h_{113} & 0 & \cdots & 0 \\ h_{211} & h_{212} & h_{213} & 0 & \cdots & 0 \\ h_{311} & h_{312} & h_{313} & 0 & \cdots & 0 \\ h_{411} & h_{412} & h_{314} & 0 & \cdots & 0 \end{bmatrix} \begin{bmatrix} w_{11} & 0 & 0 & 0 \\ w_{12} & 0 & 0 & 0 \\ w_{13} & 0 & 0 & 0 \\ 0 & 0 & 0 & 0 \\ \vdots & \vdots & \vdots & \vdots \\ 0 & 0 & 0 & 0 \end{bmatrix} \begin{bmatrix} x_1 \\ 0 \\ 0 \\ 0 \end{bmatrix} + \{UE_3\} + \begin{bmatrix} n_1 \\ n_2 \\ 0 \\ 0 \end{bmatrix}$$

$$= \begin{bmatrix} h_{111} & h_{112} & h_{113} \\ h_{211} & h_{212} & h_{213} \\ h_{311} & h_{312} & h_{313} \\ h_{411} & h_{412} & h_{413} \end{bmatrix} \begin{bmatrix} w_{11} & 0 & 0 & 0 \\ w_{12} & 0 & 0 & 0 \\ w_{13} & 0 & 0 & 0 \end{bmatrix} \begin{bmatrix} x_1 \\ 0 \\ 0 \\ 0 \end{bmatrix} + \{UE_3\} + \begin{bmatrix} n_1 \\ n_2 \\ 0 \\ 0 \end{bmatrix} \quad \cdots (8)$$

Herein, a weight for reducing interference of y3 and y4 which are polarized wave surfaces orthogonal to y1 and y2 may be calculated by the following Expression (9). In the following Expression (9), in order to evaluate a magnitude of interference power, amplitude values of the respective antennas are changed into electric power.

$$\arg \min_{w_{ij}} \{| h_{311}w_{11} + h_{312}w_{12} + h_{313}w_{13} |^2 + | h_{411}w_{11} + h_{412}w_{12} + h_{413}w_{13} |^2\} \quad \cdots (9)$$

In the above-mentioned Expression (9), as main parameters are six including $h_{311}$, $h_{312}$, $h_{313}$, $h_{411}$, $h_{412}$, and $h_{413}$, and variables are three including $w_{11}$, $w_{12}$, and $w_{13}$, it is possible to cancel three elements which become main interference factors. In the base station 230, in a case where the V-polarized wave antennas 311 and 312 and the H-polarized wave antennas 321 and 322 are array antennas, as a correlation between adjacent antennas is high, a relation illustrated in the following Expression (10) is established.

$$h_{(m+1)kn} = h_{mkn} + \frac{\delta}{\delta\lambda} h_{mkn} = h_{mkn} + \Delta_{mkn} \quad \cdots (10)$$

Herein, $\delta/\delta\lambda$ represents that the adjacent antennas are slightly shifted in a range where the antenna correlation is high, and $\Delta$ represents that an influence with respect to the first item ($h_{mkn}$) which is a main component of the propagation is extremely small. Also, m and m + 1 represent the adjacent antennas. The above-mentioned Expression (9) may be transformed based on the above-mentioned Expression (10) into the following Expression (11).

$$\arg\min_{\mathbf{w}_{ij}}\{|\, h_{311}w_{11} + h_{312}w_{12} + h_{313}w_{13}\,|^2 + |\,(h_{311}w_{11} + h_{312}w_{12} + h_{313}w_{13})$$

$$+ (\Delta_{311}w_{11} + \Delta_{312}w_{12} + \Delta_{313}w_{13})|^2\} \qquad \ldots (11)$$

Herein, main parameters are three including $h_{311}$, $h_{312}$, and $h_{313}$, minute parameters are three including $\Delta_{311}$, $\Delta_{312}$, and $\Delta_{313}$, and variables are three including $w_{11}$, $w_{12}$, and $w_{13}$. Therefore, if the minute parameters are ignored, it is possible to cancel the main components. In this manner, in a case where the V-polarized wave antennas 311 and 312 and the H-polarized wave antennas 321 and 322 are the array antennas, it is possible to suppress almost all of the interferences between the quadrature-phase polarized waves.

When $w_{11}$, $w_{12}$, and $w_{13}$ in a case where the interferences are suppressed are respectively denoted by $W_{11}$, $W_{12}$, and $W_{13}$, the above-mentioned Expression (8) becomes the following Expression (12).

$$
\begin{bmatrix} y_1 \\ y_2 \\ y_3 \\ y_4 \end{bmatrix}
=
\begin{bmatrix} y_1 \\ y_2 \\ 0 \\ 0 \end{bmatrix}
= \{UE_1\} + \{UE_3\} +
\begin{bmatrix} n_1 \\ n_2 \\ 0 \\ 0 \end{bmatrix}
$$

$$
=
\begin{bmatrix} h_{111} & h_{112} & h_{113} \\ h_{211} & h_{212} & h_{213} \\ h_{311} & h_{312} & h_{313} \\ h_{411} & h_{412} & h_{413} \end{bmatrix}
\begin{bmatrix} W_{11} & 0 & 0 & 0 \\ W_{12} & 0 & 0 & 0 \\ W_{13} & 0 & 0 & 0 \end{bmatrix}
\begin{bmatrix} x_1 \\ 0 \\ 0 \\ 0 \end{bmatrix}
+ \{UE_3\} +
\begin{bmatrix} n_1 \\ n_2 \\ 0 \\ 0 \end{bmatrix}
$$

$$
\begin{bmatrix} y_1 \\ y_2 \end{bmatrix}
=
\begin{bmatrix} h_{111} & h_{112} & h_{113} \\ h_{211} & h_{212} & h_{213} \end{bmatrix}
\begin{bmatrix} W_{11} & 0 \\ W_{12} & 0 \\ W_{13} & 0 \end{bmatrix}
\begin{bmatrix} x_1 \\ 0 \end{bmatrix}
+ \{UE_3\} +
\begin{bmatrix} n_1 \\ n_2 \end{bmatrix}
$$

$$
=
\begin{bmatrix} h_{111} & h_{112} & h_{113} & h_{131} & h_{132} & h_{133} \\ h_{211} & h_{212} & h_{213} & h_{231} & h_{232} & h_{233} \end{bmatrix}
\begin{bmatrix} W_{11} & 0 \\ W_{12} & 0 \\ W_{13} & 0 \\ 0 & W_{31} \\ 0 & W_{32} \\ 0 & W_{33} \end{bmatrix}
\begin{bmatrix} x_1 \\ x_3 \end{bmatrix}
+
\begin{bmatrix} n_1 \\ n_2 \end{bmatrix}
$$

$$
=
\begin{bmatrix} g_{11} & g_{13} \\ g_{21} & g_{23} \end{bmatrix}
\begin{bmatrix} x_1 \\ x_3 \end{bmatrix}
+
\begin{bmatrix} n_1 \\ n_2 \end{bmatrix}
\qquad \ldots (12)
$$

In the above-mentioned Expression (12), $g_{mk}$ represents a propagation path from the user equipment k to an antenna m of the base station and is a parameter including $h_{mkn}$ denoting a propagation characteristic and $w_{kn}$ denoting the weight for the beam forming. With regard to $y_1$ and $y_2$ which are the V-polarized wave surface, the respective

transmission signals ($x_1$ and $x_3$) of the odd-numbered user equipments ($UE_1$ and $UE_3$) are in a state of cross talk.

Herein, if the propagation element $g_{mk}$ is already known when received by the base station 230, the respective signals may be separated through ML (maximum likelihood procedure) estimation demodulation, MMSE (least-squares error procedure) demodulation, or the like. Also, in this signal separation demodulation processing, as the respective user equipments are at least separated by the V-polarized wave surface and the H-polarized wave surface, the separation demodulation processing is substantially reduced.

An example of a calculation for $w_{11}$, $w_{12}$, and $w_{13}$ which satisfy the above-mentioned Expression (11) will be described. By utilizing the condition of the above-mentioned Expression (10), if an item on which the influence by the weight is small is replaced by $\sigma(\Delta)$ ($h_{mkn} \gg \Delta_{mkn}$), an state represented by the following Expression (13) is obtained.

$$\arg \min_{w_{ij}}\{|h_{311}w_{11} + h_{312}w_{12} + h_{313}w_{13}|^2 + |(h_{311}w_{11} + h_{312}w_{12} + h_{313}w_{13}) + (\Delta_{311}w_{11} + \Delta_{312}w_{12} + \Delta_{313}w_{13})|^2\}$$

$$= \arg \min_{w_{ij}}\{|(h_{311}w_{11} + h_{312}w_{12} + h_{313}w_{13})|^2 + |(h_{311}w_{11} + h_{312}w_{12} + h_{313}w_{13}) + \sigma(\Delta)|^2\}$$

$$\doteq \arg \min_{w_{ij}}\{2|(h_{311}w_{11} + h_{312}w_{12} + h_{313}w_{13})|^2$$

$$+ 2\mathrm{Re}(h_{311}w_{11} + h_{312}w_{12} + h_{313}w_{13})\sigma(\Delta) + |\sigma(\Delta)|^2\} \qquad \cdots(13)$$

As in the following Expression (14), $w_{11}$, $w_{12}$, and $w_{13}$ are calculated for minimizing the first item ($h_{mkn}$) where the influence is largest in the above-mentioned Expression (10).

$$\arg \min_{w_{ij}}\{2|(h_{311}w_{11} + h_{312}w_{12} + h_{313}w_{13})|^2\} \qquad \ldots (14)$$

Herein, as in the following Expression (15), the coefficients $h_{311}$, $h_{312}$, and $h_{313}$ related to $w_{11}$, $w_{12}$, and $w_{13}$ are sorted in terms of the magnitude of the amplification. The coefficients $h_{311}$, $h_{312}$, and $h_{313}$ are vectors having an amplitude and a phase. For example, the coefficient $h_{311}$ may be broken down like $a_1 e^{j\theta 1}$.

$$\arg \mathrm{sort}\{|h_{311}|, |h_{312}|, |h_{313}|\} \qquad \ldots (15)$$

It is assumed that through the above-mentioned Expression (15), the coefficients $h_{311}$, $h_{312}$, and $h_{313}$ are sorted as represented by $|h_{311}| > |h_{312}| > |h_{313}|$. Herein, in order to simplify the notation, the parameter p is defined as illustrated in the following Expression (16).

$$h_{31p} = a_{31p}e^{j\theta_{31p}} = b_p e^{j\psi_p} \qquad \ldots (16)$$

When replaced into $b_1 > b_2 > b_3$, the above-mentioned Expression (11) becomes the following Expression (17).

$$\arg \min_{w_{ij}}\{2|b_1 e^{j\psi_1}w_{11} + b_2 e^{j\psi_2}w_{12} + b_3 e^{j\psi_3}w_{13}|^2\} \qquad \ldots (17)$$

**[0056]** [0076] Also, when $w_{1n} = e^{j\alpha n}$ is established based on the limitation $|w_{kn}|^2 = 1$ with respect to the weight for the beam forming, the above-mentioned Expression (17) is transformed as illustrated in the following Expression (18).

$$\arg \min_{\alpha_j}\{2\,|\,b_1 e^{j(\psi_1+\alpha_1)} + b_2 e^{j(\psi_2+\alpha_2)} + b_3 e^{j(\psi_3+\alpha_3)}\,|^2\} \qquad ... (18)$$

As the direction of the vector may be changed based on a value of a weight parameter $\alpha_j$, an evaluation for the above-mentioned Expression (18) may be performed by replacing into the following index. That is, if the triangle establishment condition is satisfied, a parameter satisfying the following Expression (19) exists.

$$(b_1 e^{j(\psi_1+\alpha_1)} + b_2 e^{j(\psi_2+\alpha_2)} + b_3 e^{j(\psi_3+\alpha_3)}) = 0 \qquad ... (19)$$

Based on the triangle establishment condition, when $b_1 \leq b_2 + b_3$, it is possible to obtain unique solutions ($\alpha_2$ and $\alpha_3$) satisfying the above-mentioned Expression (19) while $\alpha_1 = -\psi_1$ is set. On the other hand, when $b_1 \leq b_2 + b_3$ (the triangle establishment condition does not exist), while $\alpha_1 = -\psi_1$ is set, by adding $b_2$ and $b_3$ to the vector of $b_1$ in an inverse direction, minimum solutions ($\alpha_2 = -\psi_2 + \pi$ and $\alpha_3 = -\psi_3 + \pi$) for setting the left-hand side of the above-mentioned Expression (19) as ($b_1 - b_2 - b_3$) may be obtained. Depending on an antenna configuration of the respective user equipments, the number of the weight parameters may be four or larger in some cases. In such a case, for example, the above-mentioned Expression (11) becomes the following Expression (20). Herein, $b_1 > b_2 > b_3 > b_4$ is established.

$$\arg \min_{\alpha_j}\{2\,|\,b_1 e^{j(\psi_1+\alpha_1)} + b_2 e^{j(\psi_2+\alpha_2)} + b_3 e^{j(\psi_3+\alpha_3)} + b_4 e^{j(\psi_4+\alpha_4)}\,|^2\} \qquad ... (20)$$

In a case where the condition of the following Expression (21) is satisfied, by adding $b_2$, $b_3$, and $b_4$ to the vector of $b_1$ in the inverse direction, minimum solutions ($\alpha_2$, $\alpha_3$, and $\alpha_4$) may be obtained for setting a solution of the above-mentioned Expression (20) as ($b_1 - b_2 - b_3 - b_4$).

$$b_1 > b_2 + b_3 + b_4 \cdots (21)$$

In a case where the condition of the above-mentioned Expression (21) is not satisfied, $\alpha_1 = -\psi_1$ and $\alpha_4 = -\psi_4 + \pi$ are set. In this case, the above-mentioned Expression (20) becomes the following Expression (22).

$$\arg \min_{\alpha_j}\{2\,|\,(b_1 - b_4) + b_2 e^{j(\psi_2+\alpha_2)} + b_3 e^{j(\psi_3+\alpha_3)^2}\} \qquad ... (22)$$

Herein, if $(b_1 - b_4) > b_2$, this is $b_1 < b_2 + b_3 + b_4$ which is an antinomy condition of the above-mentioned Expression (21), the triangle establishment condition $(b_1 - b_4) < b_2 + b_3$ is established. For this reason, it is possible to uniquely obtain a minimum solution having the minimum value 0 for the algorithm in the above-mentioned Expression (11).

In contrast to this, if $(b_1 - b_4) < b_2$, based on $b_1 > b_2 > b_3 > b_4$, the triangle establishment condition $b_2 < (b_1 - b_4) + b_3 = b_1 + (b_3 - b_4)$ is established. For this reason, the solution having the minimum value 0 for the algorithm in the above-mentioned Expression (11) may be uniquely obtained. In this manner, in a case where the number of parameters is increased, it is possible to obtain the solution for the above-mentioned Expression (11).

(Operational example of communication system)

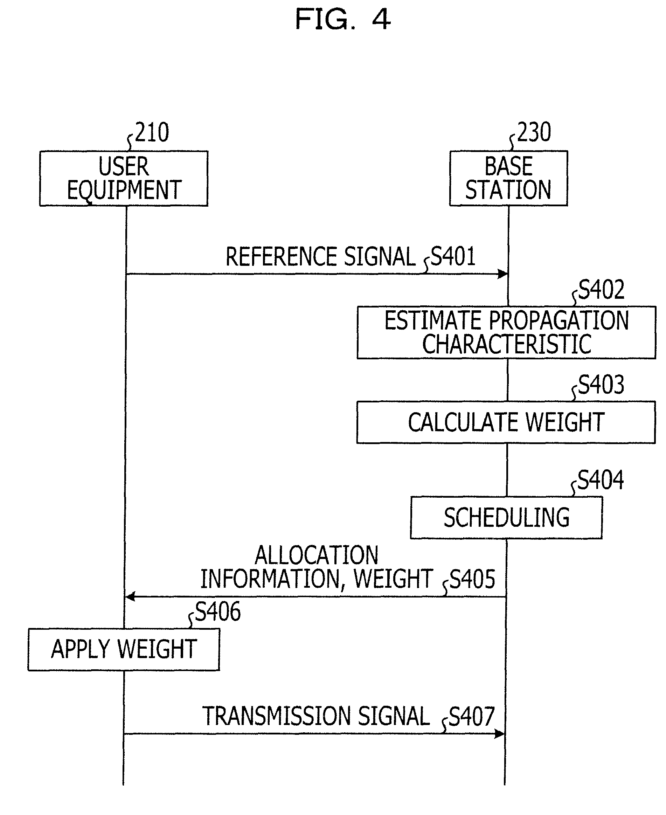

FIG. 4 is a sequence diagram illustrating an example of an operation by the communication system illustrated in FIG. 2. Herein, a description will be given of a communication between the user equipment 210 and the base station 230, but the same applies to a communication between the user equipment 220 and the base station 230. First, the user equipment 210 transmits a reference signal to the base station 230 (step S401). Next, the base station 230 estimates a propagation characteristic based on the reference signal transmitted in step S401 (step S402).

Based on the propagation characteristic estimated in step S402, the base station 230 calculates a weight for the beam forming at which the signal received by the base station 230 is the V-polarized wave surface or the H-polarized wave surface (step S403). Next, the base station 230 performs scheduling for allocating wireless resources with respect to an uplink from the user equipment 210 to the base station 230 (step S404).

The base station 230 transmits allocation information indicating the wireless resource allocated through the scheduling in step S404 and the weight calculated in step S403 to the user equipment 210 (step S405). Next, the user equipment 210 applies the weight transmitted in step S405 to beam forming of a transmission signal transmitted from the user equipment 210 to the base station 230 (step S406).

The user equipment 210 transmits the transmission signal (for example, user data) to the base station 230 by way of the wireless resource indicated by the allocation information which is transmitted in step S405 (step S407) to end the series of the operations. The base station 230 decodes the transmission signal transmitted in step S407 based on a result of the scheduling in step S404.

(Configuration of base station)

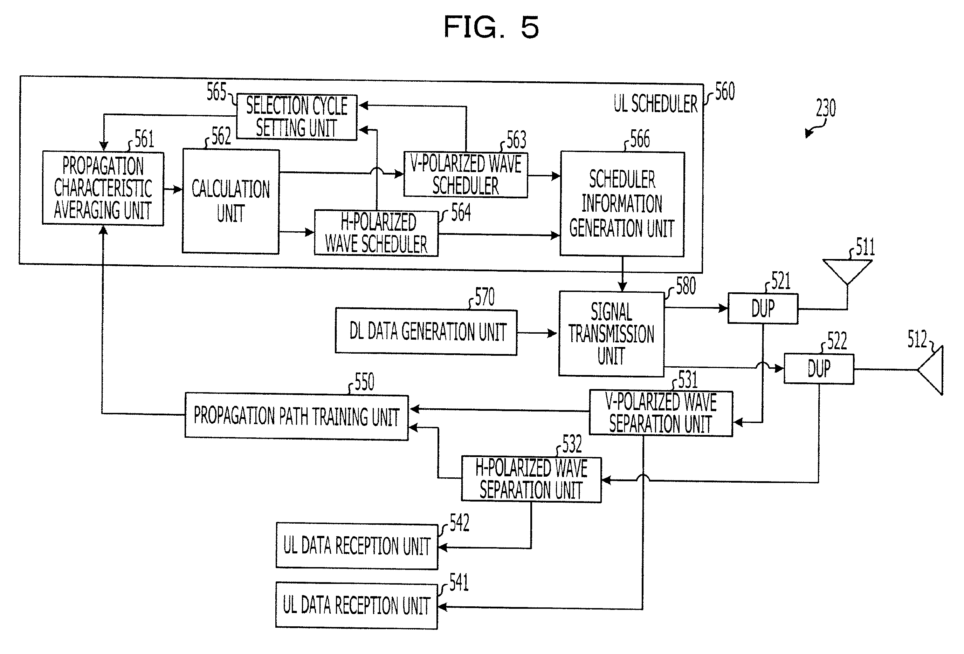

FIG. 5 illustrates a configuration example of the base station illustrated in FIG. 2. As illustrated in FIG. 5, the base station 230 is provided with the V-polarized wave antenna 511, an H-polarized wave antenna 512, a V-polarized wave duplexer 521, an H-polarized wave duplexer 522, a V-polarized wave separation unit 531, an H-polarized wave separation unit 532, UL data reception units 541 and 542, a propagation path training unit 550, a UL scheduler 560, a DL data generation unit 570, and a signal transmission unit 580.

The V-polarized wave antenna 511 receives a signal of the V-polarized wave surface and outputs the received signal to the V-polarized wave duplexer 521. Also, the V-polarized wave antenna 511 transmits the signal of the V-polarized wave surface output from the V-polarized wave duplexer 521 to the user equipment (such as the user equipment 210 or the user equipment 220). The H-polarized wave antenna 512 receives a signal of the H-polarized wave surface and outputs the received signal to the H-polarized wave duplexer 522. Also, the H-polarized wave antenna 512 transmits the signal of the H-polarized wave surface output from the H-polarized wave duplexer 522 to the user equipment.

The V-polarized wave duplexer 521 outputs the signal of the V-polarized wave surface received by the V-polarized wave antenna 511 to the V-polarized wave separation unit 531 and also outputs the signal of the V-polarized wave surface output from the signal transmission unit 580 to the V-polarized wave antenna 511. The H-polarized wave duplexer 522 outputs the signal of the H-polarized wave surface received by the H-polarized wave antenna 512 to the H-polarized wave separation unit 532 and also outputs the signal of the H-polarized wave surface output from the signal transmission unit 580 to the H-polarized wave antenna 512.

The V-polarized wave separation unit 531 separates the signal output from the V-polarized wave duplexer 521 into a reference signal and UL (Up Link) data. The V-polarized wave separation unit 531 outputs the UL data to the UL data reception unit 541 and also outputs the reference signal to the propagation path training unit 550. The H-polarized wave separation unit 532 separates the signal output from the H-polarized wave duplexer 522 into the reference signal and the UL data. The H-polarized wave separation unit 532 outputs the UL data to the UL data reception unit 542 and also outputs the reference signal to the propagation path training unit 550.

The UL data reception unit 541 decodes the UL data output from the V-polarized wave separation unit 531. The UL data reception unit 542 decodes the UL data output from the H-polarized wave separation unit 532. The decoding in the UL data reception unit 541 and the UL data reception unit 542 is carried out, for example, based on the scheduling result performed in the past in the UL scheduler 560.

The propagation path training unit 550 estimates a propagation characteristic between the respective user equipments and the base station 230 while the respective reference signals output from the V-polarized wave separation unit 531 and the H-polarized wave separation unit 532 are set as training signals. Also, the propagation path training unit 550 estimates the propagation characteristic for each of the user equipments for transmitting the signal to the base station 230.

For example, the pattern of the reference signal is decided for each of the user equipments, and the propagation path training unit 550 determines the user equipment at the transmission source based on the pattern of the obtained reference signal. Also, the propagation path training unit 550 estimates the propagation characteristic based on the amplitude of the obtained reference signal and the change in the propagation path. The propagation path training unit 550 outputs a propagation characteristic estimation value (propagation path estimation value) indicating the estimated propagation characteristic to the UL scheduler 560.

The UL scheduler 560 performs the uplink scheduling from the user equipment to the base station 230 for each of the user equipments. To be more specific, the UL scheduler 560 is provided with a propagation characteristic averaging unit 561, a calculation unit 562, a V-polarized wave scheduler 563, an H-polarized wave scheduler 564, a selection cycle setting unit 565, and a scheduler information generation unit 566.

The propagation characteristic averaging unit 561 averages the propagation characteristic estimation values output from the propagation path training unit 550 for each of the selection cycles notified from the selection cycle setting unit 565. With this configuration, the accuracy of propagation characteristic estimation values may be improved. The propagation characteristic averaging unit 561 outputs the averaged propagation characteristic estimation value to the calculation unit 562.

When the propagation characteristic estimation value is output from the propagation characteristic averaging unit 561, based on the output propagation characteristic estimation value, the calculation unit 562 calculates a V-polarized wave weight or an H-polarized wave weight as a transmission weight to be transmitted to the user equipment. The V-polarized wave weight is a weight for the beam forming at which the signal received by the base station 230 is the V-polarized wave surface. The H-polarized wave weight is a weight for the beam forming at which the signal received by the base station 230 is the H-polarized wave surface.

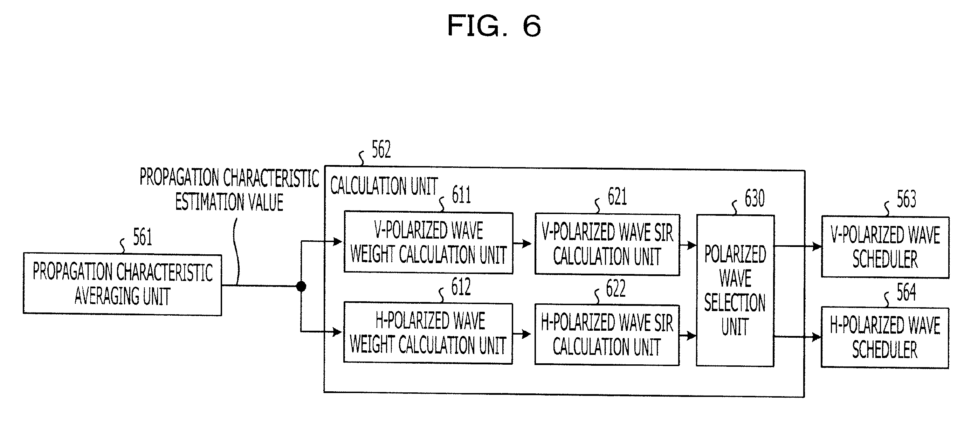

In a case where the V-polarized wave weight is calculated as the weight to be transmitted to the user equipment, the calculation unit 562 outputs the propagation characteristic estimation value and the V-polarized wave weight to the V-polarized wave scheduler 563. Also, in a case where the H-polarized wave weight is calculated as the weight to be transmitted to the user equipment, the calculation unit 562 outputs the propagation characteristic estimation value and the H-polarized wave weight to the H-polarized wave scheduler 564. The polarized wave weight calculated by the calculation unit 562 as the weight to be transmitted to the user equipment may be set in advance for each of the user equipments or selected based on the propagation characteristic (see FIG. 6).

Based on the propagation characteristic estimation value output from the calculation unit 562, the V-polarized wave scheduler 563 allocates a wireless resource to the uplink from the user equipment to the base station 230. The V-polarized wave scheduler 563 outputs allocation information indicating an allocation result to the scheduler information generation unit 566. Also, the V-polarized wave scheduler 563 outputs the V-polarized wave weight output from the calculation unit 562 to the scheduler information generation unit 566.

Based on the propagation characteristic estimation value output from the calculation unit 562, the H-polarized wave scheduler 564 allocates a wireless resource to the uplink from the user equipment to the base station 230. The H-polarized wave scheduler 564 outputs allocation information indicating an allocation result to the scheduler information generation unit 566. Also, the H-polarized wave scheduler 564 outputs the H-polarized wave weight output from the calculation unit 562 to the scheduler information generation unit 566.

Also, the V-polarized wave scheduler 563 and the H-polarized wave scheduler 564 may calculate a fluctuation in the propagation path between the user equipment and the base station 230 based on the propagation characteristic estimation value (for example, a Doppler frequency Fd). For example, based on the calculated Doppler frequency, the V-polarized wave scheduler 563 and the H-polarized wave scheduler 564 decide a selection cycle for the polarized wave surface allocated to the user equipment and notifies the selection cycle setting unit 565 of the decided cycle.

The scheduler information generation unit 566 generates scheduler information including the allocation information output from the V-polarized wave scheduler 563 and the V-polarized wave weight. Also, the scheduler information generation unit 566 generates scheduler information including the allocation information output from the H-polarized wave scheduler 564 and the H-polarized wave weight. The scheduler information generation unit 566 outputs the generated scheduler information to the signal transmission unit 580.

The DL data generation unit 570 reads out data, for example, from the transmission buffer of the base station 230 to generate DL (Down Link) data and outputs the generated DL data to the signal transmission unit 580. The signal transmission unit 580 multiplexes the scheduler information from the scheduler information generation unit 566 with the DL data from the DL data generation unit 570. The signal transmission unit 580 outputs the multiplexed signal to the V-polarized wave duplexer 521 and the H-polarized wave duplexer 522.

The UL data reception unit 541, the UL data reception unit 542, the propagation path training unit 550, the UL scheduler 560, the DL data generation unit 570, and the signal transmission unit 580 may be realized, for example, by a computation circuit such as the DSP.

In the above-mentioned configuration, the respective transmission signals from the respective user equipments are allocated to the V-polarized wave surface and the H-polarized wave surface and received by the antennas in accordance with the polarized wave surfaces among the V-polarized wave antenna 511 and the H-polarized wave antenna 512. With this configuration, the UL data is input to the UL data reception unit 541 and the UL data reception unit 542 from mutually different user equipments, and the decoding processing in the UL data reception unit 541 and the UL data reception unit 542 may be independently carried out. Also, the number of user terminals respectively separated in the UL data reception unit 541 and the UL data reception unit 542 is, for example, halved. For this reason, it is possible to reduce the decoding processing amount.

Also, the UL scheduler 560 is provided with the respective schedulers (the V-polarized wave scheduler 563 and the H-polarized wave scheduler 564) which respectively carry out the respective scheduling of the respective communications by the V-polarized wave antenna 511 and the V-polarized wave antenna 512. Then, as the uplinks of the respective user equipments are allocated to the V-polarized wave surface and the H-polarized wave surface, the V-polarized wave scheduler 563 and the H-polarized wave scheduler 564 carry out the scheduling for the mutually different user equipments.

With this configuration, it is possible to independently perform the scheduling processings of the V-polarized wave scheduler 563 and the H-polarized wave scheduler 564. Also, the number of user terminals carrying out the scheduling in the V-polarized wave scheduler 563 and the H-polarized wave scheduler 564 is, for example, halved. For this reason, it is possible to reduce the scheduling processing amount.

FIG. 6 illustrates an example of processing by the calculation unit illustrated in FIG. 5. In FIG. 6, a part similar to the part illustrated in FIG. 5 is assigned with the same reference symbol, and a description thereof will be omitted. As illustrated in FIG. 6, the calculation unit 562 of the base station 230 illustrated in FIG. 5 is provided with a V-polarized wave weight calculation unit 611, an H-polarized wave weight calculation unit 612, a V-polarized wave SIR calculation unit 621, an H-polarized wave SIR calculation unit 622, and a polarized wave selection unit 630.

The V-polarized wave weight calculation unit 611 calculates the V-polarized wave weight based on the propagation characteristic estimation value output from the propagation characteristic averaging unit 561 and outputs the calculated V-polarized wave weight and the propagation characteristic estimation value to the V-polarized wave SIR calculation unit 621. The H-polarized wave weight calculation unit 612 calculates the H-polarized wave weight based on the propagation characteristic estimation value output from the propagation characteristic averaging unit 561 and outputs the calculated H-polarized wave weight and the propagation characteristic estimation value to the H-polarized wave SIR calculation unit 622.

The V-polarized wave SIR calculation unit 621 calculates a V-polarized wave SIR (propagation quality) based on the propagation characteristic estimation value output from the V-polarized wave weight calculation unit 611 and the calculated V-polarized wave SIR and the V-polarized wave weight to the polarized wave selection unit 630. The V-polarized wave SIR is an SIR (Signal to Interference Ratio) corresponding to the V-polarized wave weight. That is, the V-polarized wave SIR is an SIR for the signal when the signal received by the base station 230 is the V-polarized wave surface as the V-polarized wave weight is used for the beam forming of the user equipment.

The H-polarized wave SIR calculation unit 622 calculates an H-polarized wave SIR (propagation quality) based on the propagation characteristic estimation value output from the H-polarized wave weight calculation unit 612 and outputs the calculated H-polarized wave SIR and the H-polarized wave weight to the polarized wave selection unit 630. The H-polarized wave SIR is an SIR corresponding to the H-polarized wave weight. That is, the H-polarized wave SIR is an SIR for the signal when the signal received by the base station 230 is the H-polarized wave surface as the H-polarized wave weight is used for the beam forming of the user equipment. In this manner, the V-polarized wave SIR calculation unit 621 and the H-polarized wave SIR calculation unit 622 (quality calculation unit) calculate the respective propagation qualities corresponding to the respective weights.

The polarized wave selection unit 630 selects the weight to be transmitted to the user equipment among the V-polarized wave weight output from the V-polarized wave SIR calculation unit 621 and the H-polarized wave weight output from the H-polarized wave SIR calculation unit 622. To be more specific, the polarized wave selection unit 630 selects the weight based on the V-polarized wave SIR output from the V-polarized wave SIR calculation unit 621 and the H-polarized wave SIR output from the H-polarized wave SIR calculation unit 622.

For example, in a case where the V-polarized wave SIR is higher than the H-polarized wave SIR, the polarized wave selection unit 630 selects the V-polarized wave weight as the weight to be transmitted to the user equipment. Also, in a case where the V-polarized wave SIR is lower than the H-polarized wave SIR, the polarized wave selection unit 630 selects the H-polarized wave weight as the weight to be transmitted to the user equipment. Also, in a case where the V-polarized wave SIR is equal to the H-polarized wave SIR, for example, the polarized wave selection unit 630 selects a predetermined polarized wave surface among the V-polarized wave surface and the H-polarized wave surface.

The polarized wave selection unit 630 outputs the selected weight and the propagation characteristic estimation value among the V-polarized wave scheduler 563 and the H-polarized wave scheduler 564, to the scheduler of polarized wave corresponding to the selected weight. For example, in a case where the V-polarized wave weight is selected, the polarized wave selection unit 630 outputs the V-polarized wave weight and the propagation characteristic estimation value to the V-polarized wave scheduler 563. Also, in a case where the H-polarized wave weight is selected, the polarized wave selection unit 630 outputs the H-polarized wave weight and the propagation characteristic estimation value to the H-polarized wave scheduler 564.

In this manner, the V-polarized wave weight calculation unit 611 and the H-polarized wave weight calculation unit 612 calculate the V-polarized wave weight and the H-polarized wave weight. Also, the V-polarized wave SIR calculation unit 621 and the H-polarized wave SIR calculation unit 622 (quality calculation unit) calculate the V-polarized wave SIR and the H-polarized wave SIR corresponding to the V-polarized wave weight and the H-polarized wave weight.

Also, based on the V-polarized wave SIR and the H-polarized wave SIR, the polarized wave selection unit 630 selects the weight to be transmitted to the user equipment among the V-polarized wave weight and the H-polarized wave weight. With this configuration, the polarized wave surface having the high propagation quality among the V-polarized wave surface and the H-polarized wave surface is allocated to the user equipment, and also the weight for causing the base station 230 to receive the transmission signal on the allocated polarized wave surface may be transmitted to the user equipment. For this reason, the improvement in the communication quality and the signal processing amount reduction in the base station 230 may be realized.

(Calculation for propagation quality)

An example of a method of calculating the SIR as the propagation quality will be described. Herein, in order to simplify the notation, an SISO (Single Input and Single Output) configuration of $1 \times 1$ transmission and reception will be described as an example. When an input to the reception antenna is denoted by y, a propagation characteristic is denoted by h, a pilot channel is denoted by p, and noise is denoted by n, the following Expression (23) is obtained.

$$y = hp + n \cdots (23)$$

In order to calculate the SIR with a high accuracy, in a state where the propagation path correlation is high (a time or a frequency at which the propagation path fluctuation is low), pilot patterns of the pilot channel may be continuously received. For example, in a case where the pilot patterns are transmitted in the time domain continuously by T times, the above-mentioned Expression (23) may be represented as the following Expression (24).

$$y = hp + n \quad y = [y_1, y_2, \cdots, y_3]^T \cdots (24)$$

The case has been illustrated in which the pilot patterns are transmitted in the time direction continuously by T times in the above-mentioned Expression (24), the same applies to a case in which the pilot patterns are continuously transmitted in the frequency domain. As illustrated in the following Expression (25), it is possible to calculate a propagation characteristic estimation value ^h (channel estimation value) by multiplying an inverse pattern of the pilot pattern in the base station 230.

$$\hat{h} = \frac{1}{t} p^H y = \frac{1}{t} p^H (hp + n) = h + E < n > \qquad \cdots (25)$$

In the above-mentioned Expression (25), E<n> denotes a value obtained by averaging noise in amplitude dimension, and when the average number is large, this converges to 0. In this manner, it suffices that the channel estimation which is hardly affected by the noise is carried out. The propagation characteristic estimation value ^h obtained through this channel estimation indicates a gain of the propagation path with respect to the known pilot pattern and therefore indicates a magnitude of the reception signal.

The SIR may be calculated by transforming the above-mentioned Expression (25) into power dimension through the following Expression (26).

$$SIR = \frac{|\hat{h}|^2}{\frac{1}{t}|y|^2 - |\hat{h}|^2} = \frac{|\hat{h}|^2}{\frac{1}{t}(hp + n)^H (hp + n) - |\hat{h}|^2} = \frac{|\hat{h}|^2}{\frac{1}{t}(t|\hat{h}|^2 + 2\,Re(hn^H p) + n^H n) - |\hat{h}|^2}$$

$$= \frac{|\hat{h}|^2}{\frac{1}{t} n^H n + 2 E < n >} = \frac{S}{N} \qquad \cdots (26)$$

In the above-mentioned Expression (26), a numerator indicates an electric power of the signal, and a denominator indicates an electric power of the noise obtained by subtracting the electric power of the signal from the entire reception electric power. In this manner, the SIR may be calculated based on the reception signal and the propagation characteristic estimation value ^h thereof.

(SIR improvement in case where degree of weight setting freedom exists)

In a case where the base station 230 has a plurality of antennas for receiving the signals having the same polarized wave, after the weight setting on the transmission side through the calculation of the V-polarized wave weight and the H-polarized wave weight, the degree of weight setting freedom on the reception side further exists. For example, in a case where the base station 230 has a plurality of antennas in the horizontal direction, space diversity reception is carried out, and the SIR may be improved. In a case where the base station 230 has R antennas having the same polarized wave, the above-mentioned Expression (23) may be represented as the following Expression (27).

$$y = hd + n \; ; y = [y_1, y_2, \cdots, y_R]^\top \cdots (27)$$

It is supposed that a signal d transmitted from a certain antenna is received by the R antennas. In this case, with a single antenna, while the received signal is set as the reference, the remaining signals may be combined. In this case, the degree of weight setting freedom is R-1. Although various methods are developed as a combining method for improving the SIR, as a general method, MRC (Maximum Ratio Combining) combining is proposed. In the MRC combining, by using the propagation characteristic estimation value ^h, the signal is decoded as illustrated in the following Expression (28).

$$^\wedge d = \frac{^\wedge h^H}{\left|^\wedge h\right|^2} y = \frac{^\wedge h^H}{\left|^\wedge h\right|^2} (hd + n) \qquad \cdots (28)$$

Through the above-mentioned Expression (28), the SIR is improved as illustrated in the following Expression (29).

$$SIR = \frac{\left|^\wedge h\right|^2}{\left|n\right|^2} \qquad \cdots (29)$$

(Configuration of user equipment)

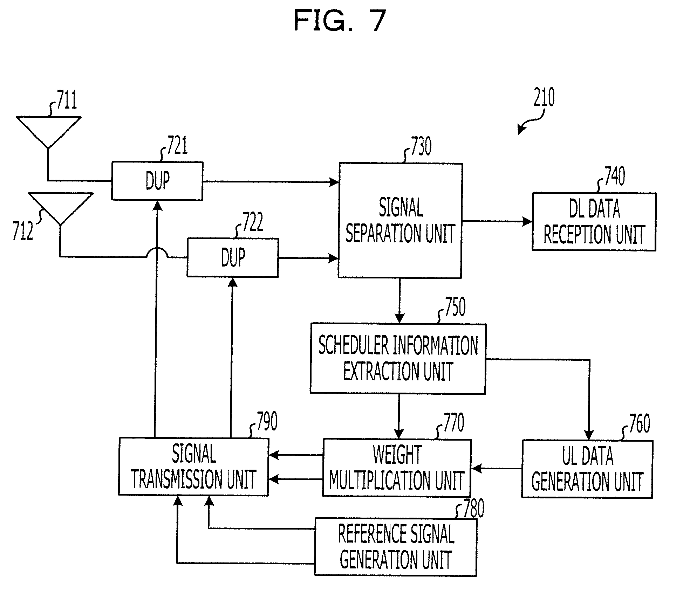

FIG. 7 illustrates a configuration example of the user equipment. In FIG. 7, a configuration of the user equipment 210 will be described, but the same applies to a configuration of the user equipment 220. As illustrated in FIG. 7, the user equipment 210 is provided with a V-polarized wave antenna 711, an H-polarized wave antenna 712, a duplexer 721, a duplexer 722, a signal separation unit 730, a DL data reception unit 740, a scheduler information extraction unit 750, an UL data generation unit 760, a weight multiplication unit 770, a reference signal generation unit 780, and a signal transmission unit 790.

The V-polarized wave antenna 711 receives the signal of the V-polarized wave surface and outputs the received signal to the duplexer 721. Also, the V-polarized wave antenna 711 transmits the signal output from the duplexer 721 to the base station 230. The H-polarized wave antenna 712 receives the signal of the H-polarized wave surface and outputs the received signal to the duplexer 722. Also, the H-polarized wave antenna 712 transmits the signal of the H-polarized wave surface output from the duplexer 722 to the base station 230.

The duplexer 721 outputs the signal received by the V-polarized wave antenna 711 to the signal separation unit 730. Also, the duplexer 721 outputs the signal output from the signal transmission unit 790 to the V-polarized wave antenna 711. The duplexer 722 outputs the signal received by the H-polarized wave antenna 712 to the signal separation unit 730. Also, the duplexer 722 outputs the signal output from the signal transmission unit 790 to the H-polarized wave antenna 712.

The signal separation unit 730 separates the signal output from the duplexer 721 into the DL data and the scheduler information. The signal separation unit 730 outputs the separated DL data to the DL data reception unit 740. Also, the signal separation unit 730 outputs the separated scheduler information to the scheduler information extraction unit 750. The DL data reception unit 740 decodes the DL data output from the signal separation unit 730.

The scheduler information extraction unit 750 extracts the scheduler information in which the user equipment 210 is set as an address from the scheduler information output from the signal separation unit 730. The scheduler information extraction unit 750 outputs the allocation information included in the extracted scheduler information to the UL data generation unit 760. The scheduler information extraction unit 750 notifies the weight multiplication unit 770 of the weight for the beam forming included in the extracted scheduler information.

The UL data generation unit 760 reads out a necessary amount of data from the transmission buffer of the user equipment 210 while following a format indicated by the allocation information output from the scheduler information extraction unit 750 and encodes the read out data to generate UL data. The UL data generation unit 760 outputs the generated UL data to the weight multiplication unit 770.

The weight multiplication unit 770 generates UL signals of two systems respectively corresponding to the V-polarized wave antenna 711 and the H-polarized wave antenna 712 from the UL data output from the UL data generation unit 760. Then, the weight multiplication unit 770 multiplies the generated respective UL signals by the weight notified from the scheduler information extraction unit 750. The weight multiplication unit 770 outputs the respective UL signals, where the weight is multiplied, to the signal transmission unit 790. The reference signal generation unit 780 generates a reference signal having a predetermined pattern to be output to the signal transmission unit 790.

The signal transmission unit 790 outputs the reference signal output from the reference signal generation unit 780 to the duplexer 721 and the duplexer 722. With this configuration, the reference signal is transmitted to the base station 230 by the V-polarized wave antenna 711 and the H-polarized wave antenna 712. Also, the signal transmission unit 790 outputs the respective UL signals output from the weight multiplication unit 770 to the duplexer 721 and the duplexer 722, respectively. With this configuration, the UL signal corresponding to the V-polarized wave antenna 711 is transmitted from the V-polarized wave antenna 711 to the base station 230, and the UL signal corresponding to the H-polarized wave antenna 712 is transmitted from the H-polarized wave antenna 712 to the base station 230.

The DL data reception unit 740, the scheduler information extraction unit 750, the UL data generation unit 760, the weight multiplication unit 770, the reference signal generation unit 780 and the signal transmission unit 790 may be realized, for example, by a computation circuit such as the DSP.

(Modified example of calculation for weight for beam forming)

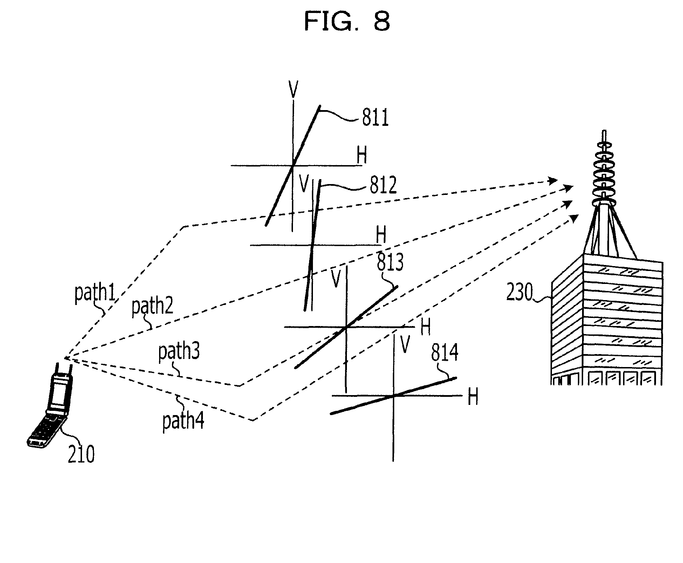

FIG. 8 illustrates polarized wave surfaces of the respective paths between the base station and the user equipments. As illustrated in FIG. 8, the signal transmitted from the user equipment 210 to the base station 230 is generally multi paths. Herein, it is assumed that the multi paths of the signal transmitted from the user equipment 210 to the base station 230 are paths path1 to path4.

The signals from the user equipment 210 are subjected to mutually different reflections in the paths path1 to path4 and reach the base station 230. For this reason, the signals from the user equipment 210 have different polarized wave amplitudes for each of the paths. Polarized wave surfaces 811 to 814 are respectively polarized wave surfaces of the signals in the paths path1 to path4. In the polarized wave surfaces 811 to 814, the horizontal axis represents an amplitude of the H-polarized wave surface, and the vertical axis represents an amplitude of the V-polarized wave surface.

In a state illustrated in FIG. 8, as the user equipment 210 transmits beam while narrowing in the direction of the path path2 which is the polarized wave surface 812 (substantially the same as the V-polarized wave surface) closest to the V-polarized wave surface or the H-polarized wave surface, the signal received in the base station 230 may be set as the V-polarized wave surface. In this manner, as the user equipment 210 performs the beam forming while narrowing in a particular path, the polarized wave surface of the signal received in the base station 230 may be controlled.

The base station 230 obtains a plurality of pre-coding weights indicating the weights for the beam forming in the user equipment 210. The plurality of pre-coding weights indicate weights for the beam forming corresponding to a plurality of paths from the user equipment 210 to the base station 230 (for example, the paths path1 to path4). The plurality of pre-coding weights are previously stored, for example, in a memory of the base station 230.

The base station 230 selects a pre-coding weight at which the signal received in the base station 230 is a polarized wave surface closest to the V-polarized wave surface or the H-polarized wave surface among the obtained plurality of pre-coding weights. Then, the base station 230 transmits the selected pre-coding weight to the user equipment 210. The user equipment 210 transmits the signal, on which the beam forming is performed by the pre-coding weight received from the base station 230, to the base station 230.

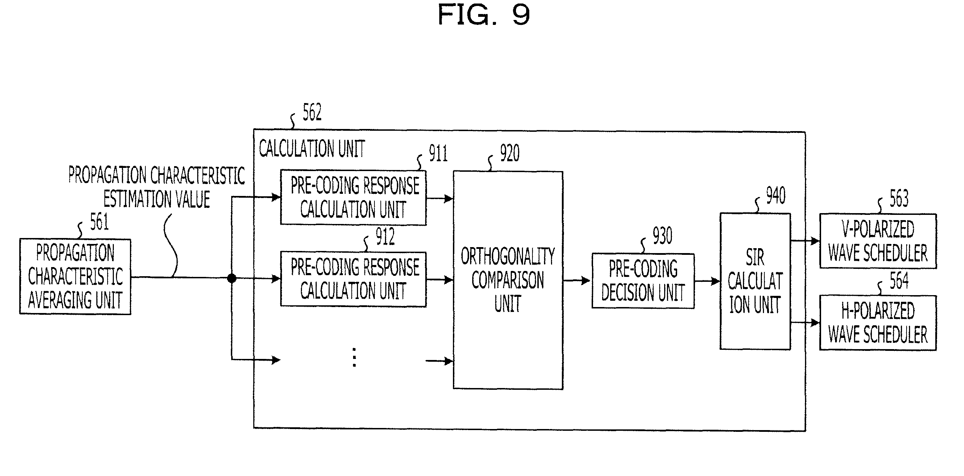

FIG. 9 illustrates another example of the processing by the calculation unit illustrated in FIG. 5. In FIG. 9, a part similar to the part illustrated in FIG. 5 is assigned with the same reference symbol, and a description thereof will be omitted. As illustrated in FIG. 9, the calculation unit 562 of the base station 230 illustrated in FIG. 5 is provided with pre-coding response calculation units 911, 912, ···, an orthogonality comparison unit 920, a pre-coding decision unit 930, and an SIR calculation unit 940.

The pre-coding response calculation units 911, 912, etc., respectively correspond to the plurality of the first, second, etc. pre-coding weights. For example, the pre-coding response calculation unit 911 multiplies the first pre-coding weight by the propagation characteristic estimation value to calculate a response value of a reception signal in the first pre-coding weight. Similarly, the pre-coding response calculation units 912, etc., respectively calculate response values in the second, etc., pre-coding weights. The pre-coding response calculation units 911, 912, etc., output the calculated response values to the orthogonality comparison unit 920.

The orthogonality comparison unit 920 compares orthogonalities of the respective response values output from the pre-coding response calculation units 911, 912, etc. The orthogonality comparison unit 920 outputs orthogonality comparison results to the pre-coding decision unit 930. The orthogonality comparison in the orthogonality comparison unit 920 will be described below.

Based on the comparison result outputs from the orthogonality comparison unit 920, the pre-coding decision unit 930 decides a pre-coding weight to be transmitted to the user equipment. To be more specific, the pre-coding decision unit 930 decides a pre-coding weight at which the response value of the reception signal is closest to one of the H-polarized wave surface and the V-polarized wave surface.

Also, the pre-coding decision unit 930 decides the polarized wave surface in which the response value of the reception signal is close in the decided pre-coding among the V-polarized wave surface and the H-polarized wave surface as decided corresponding to the pre-coding weight. The pre-coding decision unit 930 outputs the pre-coding weight and polarized wave surface thus decided and the propagation characteristic estimation value to the SIR calculation unit 940.

The SIR calculation unit 940 calculates an SIR corresponding to the pre-coding weight output from the pre-coding decision unit 930. The SIR corresponding to the pre-coding weight is an SIR in a case where the pre-coding weight is used for the beam forming of the user equipment. The SIR calculation unit 940 outputs the calculated SIR, the pre-coding weight, and the propagation characteristic estimation value to the scheduler of the polarized wave corresponding to the pre-coding weight among the V-polarized wave scheduler 563 and the H-polarized wave scheduler 564.

For example, in a case where the pre-coding weight is selected at which the response value is close to the V-polarized wave surface by the pre-coding decision unit 930, the SIR calculation unit 940 outputs the SIR, the pre-coding weight, and the propagation characteristic estimation value to the V-polarized wave scheduler 563. Also, in a case where the pre-coding weight is selected at which the response value is close to the H-polarized wave surface by the pre-coding decision unit 930, the SIR calculation unit 940 outputs the SIR, the pre-coding weight, and the propagation characteristic estimation value to the H-polarized wave scheduler 564.

In the orthogonality comparison unit 920 of FIG. 9, for example, the orthogonality comparison is carried out by an algorithm illustrated in the following Expression (30).

$$\arg\max_{Pi}\left\{\frac{\sum_{n=1}^{N}|r_{nH}(Pi)|^2}{\sum_{n=1}^{N}|r_{nV}(Pi)|^2}\bigg|_{i=1}, \frac{\sum_{n=1}^{N}|r_{nH}(Pi)|^2}{\sum_{n=1}^{N}|r_{nV}(Pi)|^2}\bigg|_{i=2},\cdots, \frac{\sum_{n=1}^{N}|r_{nH}(Pi)|^2}{\sum_{n=1}^{N}|r_{nV}(Pi)|^2}\bigg|_{i=X},\right.$$

$$\left.\frac{\sum_{n=1}^{N}|r_{nV}(Pi)|^2}{\sum_{n=1}^{N}|r_{nH}(Pi)|^2}\bigg|_{i=1},\cdots, \frac{\sum_{n=1}^{N}|r_{nV}(Pi)|^2}{\sum_{n=1}^{N}|r_{nH}(Pi)|^2}\bigg|_{i=X}\right\} \quad \cdots (30)$$

In the above-mentioned Expression (30), $r_{nH}(Pi)$ denotes a reception signal of an n-th signal among the H-polarized wave antennas 321 to 326 of the base station 230 in a case where the i-th pre-coding weight is used for the beam forming. $r_{nv}(Pi)$ denotes a reception signal of an n-th signal among the V-polarized wave antennas 311 to 316 of the base station 230 in a case where the i-th pre-coding weight is used for the beam forming.

Herein, it is assumed that X pre-coding weights exist (for example, 64). Also, it is assumed that N antennas for respectively receiving the signal of the V-polarized wave surface and the signal of the H-polarized wave surface (for example, 6) exist. Through the above-mentioned Expression (30), by obtaining total electric power of the signals for each of the polarized wave surfaces in the case by using the i-th pre-coding weight, and a largest value among (total electric power of the H-polarized wave surface)/(total electric power of the V-polarized wave surface) and (total electric power of the V-polarized wave surface)/(total electric power of the H-polarized wave surface) is calculated.

The calculated pre-coding weight (i = x) and the polarized wave surface represented by the numerator (the H-polarized wave surface or the V-polarized wave) become the pre-coding weight and the polarized wave surface of the signal received in the base station 230 that is to be selected. With regard to the pre-coding weight, all the response values of the applicable pre-coding weights may be calculated, or only the pre-coding weights corresponding to beams at certain angle intervals may be calculated.

In this manner, with respect to the propagation characteristic estimation value, the predetermined plural pre-coding weights are multiplied, and the pre-coding weight at which the multiplication result is closest to one of the V-polarized wave surface and the H-polarized wave surface is calculated as the weight to be transmitted to the user equipment. With this configuration, through the selection of the pre-coding weight, the optimal polarized wave surface may be decided. Also, it suffices that the pre-coding weight selected from the plural pre-coding weights may be transmitted to the user equipment, the processing for deciding the weight to be transmitted to the user equipment may be reduced.

(Setting example 1 for selection cycle)

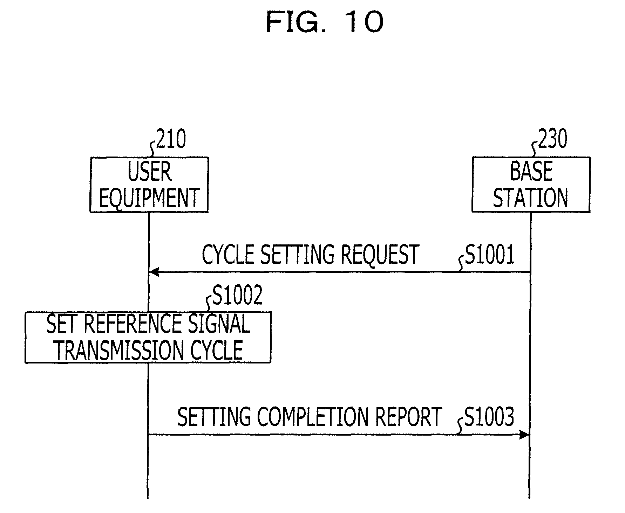

FIG. 10 is a sequence diagram illustrating an example of a setting operation for a transmission cycle of a reference signal. Herein, a setting operation for a transmission cycle in the user equipment 210 will be described, but the same also applies to a setting operation for a transmission cycle in the user equipment 220. First, the base station 230 transmits a cycle setting request to the user equipment 210 (step S1001). The user equipment 210 sets a transmission cycle for the reference signal based on the cycle setting request transmitted in step S1001 (step S1002).

The user equipment 210 transmits a setting completion report indicating that the transmission cycle for the reference signal is set in step S1002 to the base station 230 (step S1003) to end the series of the setting operations. The reference signal generation unit 780 of the user equipment 210 outputs the reference signal at the transmission cycle set in step S1002.

The selection cycle setting unit 565 of the base station 230 sets a cycle indicated by the cycle setting request transmitted in step S1001. With this configuration, at the transmission cycle set in step S1002, the reference signal is transmitted from the user equipment 210 to the base station 230, and also in the base station 230, the weight to be transmitted to the user equipment is selected. With this configuration, in the calculation unit 562 of the base station 230, at each cycle at which the reference signal is transmitted from the user equipment 210, it is possible to calculate the weight transmitted to the user equipment 210.

For example, in the standard of 3GPP (3rd Generation Partnership Project), the cycle setting request is transmitted as a part of RRC Connection Configuration. Also, the setting completion report is transmitted as a part of RRC Connection Configuration Complete. Also, the cycle setting request and the setting completion report are transmitted and received, for example, as upper layer information for governing a control of a communication between the base station 230 and the user equipment 210 as a part of the DL data and the UL data.

(Setting example 2 for selection cycle)

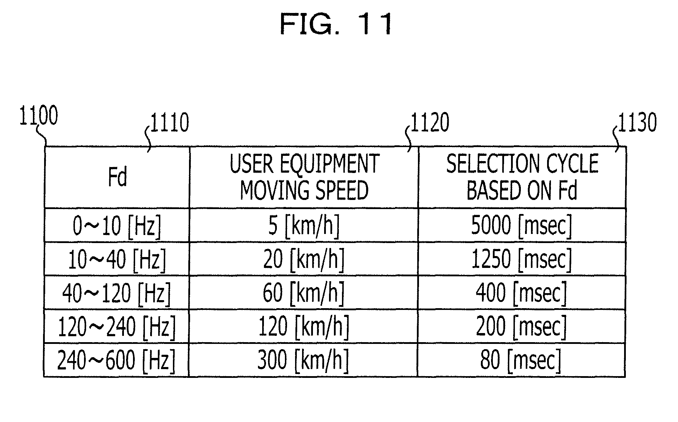

FIG. 11 illustrates a setting for a selection cycle based on a polarized wave fluctuation. In a table 1100 illustrated in FIG. 11, reference symbol 1110 denotes the Doppler frequency Fd between the user equipments (the user equipments 210 and 220) and the base station 230. Reference symbol 1120 denotes a movement speed of the user equipment. As represented by reference symbols 1110 and 1120, as the movement speed of the user equipment is larger, the Doppler frequency Fd between the user equipment and the base station 230 becomes larger.

Reference symbol 1130 denotes a selection cycle for the weight based on the Doppler frequency Fd. The selection cycle for the weight denoted by reference symbol 1130 becomes smaller as the Doppler frequency Fd is larger. For example, in the movement speed of the user equipment denoted by reference symbol 1120, the selection cycle for the weight denoted by reference symbol 1130 is a time spent for moving by 8 m which is an entire length for an average building.

Each of the V-polarized wave scheduler 563 and the H-polarized wave scheduler 564 calculates the Doppler frequency Fd based on the averaged propagation characteristic estimation value. For example, the propagation characteristic estimation values are obtained at plural sample times, and the Doppler frequency Fd may be estimated from a characteristic change amount based on a temporal fluctuation of the obtained propagation characteristic estimation values.

For example, the Doppler frequency Fd may be estimated through a calculation based on the propagation characteristic estimation value. Alternatively, the temporal fluctuation of the propagation characteristic estimation values and the Doppler frequency Fd are stored while being associated with the base station 230, and by searching for the Doppler frequency Fd corresponding to the obtained propagation characteristic estimation value, the Doppler frequency Fd may be estimated. In this case, the processing amount may be reduced as compared with the case of estimating the Doppler frequency Fd through the calculation.

Also, the calculation for the Doppler frequency Fd based on the propagation characteristic estimation value is not limited to the above-mentioned method. For example, the calculation for the Doppler frequency Fd may also be carried out through a method disclosed in the following non-patent document (Shunji Miyazaki, Kazuhisa Obuchi, and Takaharu Nakamura, "A method of Fading Frequency estimation for W-CDMA Mobile Station", the Institute of Electronics, Information and Communication Engineers 2002, Sept).

Each of the V-polarized wave scheduler 563 and the H-polarized wave scheduler 564 notifies the selection cycle setting unit 565 of the calculated Doppler frequency Fd. The selection cycle setting unit 565 decides the selection cycle based on the Doppler frequency Fd notified by the V-polarized wave scheduler 563 and the H-polarized wave scheduler 564. The selection cycle setting unit 565 notifies the propagation characteristic averaging unit 561 of the decided cycle as an average cycle in the propagation characteristic averaging unit 561.

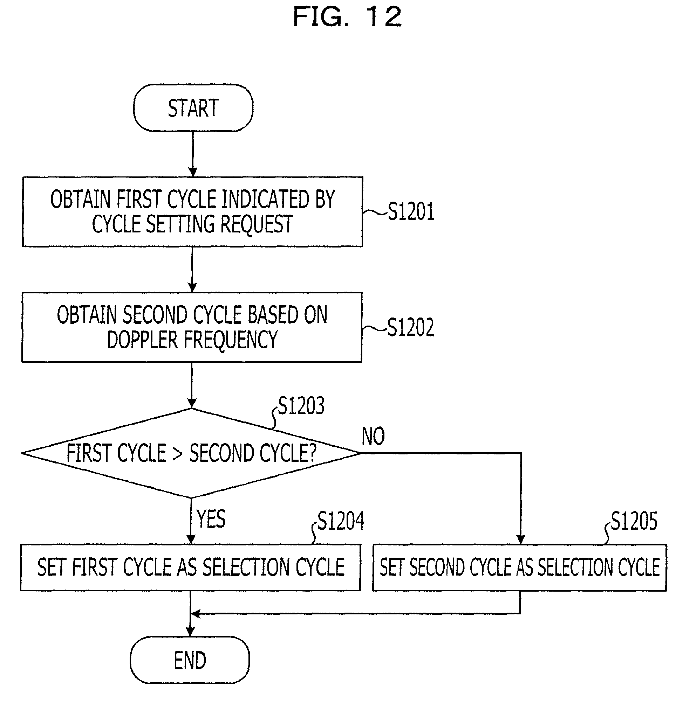

FIG. 12 is a flow chart illustrating an example of a decision processing for the selection cycle based on Doppler frequency. Herein, a decision processing for a selection cycle in the base station 230 with the user equipment 210 will be described, but the same also applies to a decision processing for a selection cycle in the base station 230 with the user equipment 220. First, the base station 230 obtains a cycle indicated by the cycle setting request transmitted to the user equipment 210 (which is set as a first cycle) (step S1201).

The Doppler frequency Fd is calculated, and based on the table 1100 illustrated in FIG. 11, a cycle based on the Doppler frequency Fd (which is set as a second cycle) is obtained (step S1202). It is determined whether or not the first cycle obtained in step S1201 is longer than the second cycle obtained in step S1202 (step S1203).

In step S1203, in a case where the first cycle is longer than the second cycle (step S1203: Yes), the first cycle obtained in step S1201 is set as the selection cycle (step S1204) to end the series of the operations. In a case where the first cycle is equal to or shorter than the second cycle (step S1203: No), the second cycle obtained in step S1202 is set as the selection cycle (step S1205) to end the series of the operations.

Also, the base station 230 transmits the cycle setting request indicating the selection cycle set in step S1204 or S1205 to the user equipment 210, so that the reference signal may be received from the user equipment 210 at the set selection cycle.

In this manner, based on the propagation characteristic estimation value, the calculation unit 562 of the base station 230 calculates the Doppler frequency Fd between the user equipment and calculates the weight to be transmitted to the user equipment for every calculated cycle based on the Doppler frequency Fd. For example, as the Doppler frequency Fd is larger, the calculation unit 562 further shortens the cycle for calculating the weight to be transmitted to the user equipment.

With this configuration, in a case where the movement of the user equipment is slow and the change in the propagation environment between the user equipment and the base station 230 is small, it is possible to lower the calculation frequency for the weight of the user equipment. For this reason, the weight calculation processing may be reduced. On the other hand, in a case where the movement of the user equipment is fast and the change in the propagation environment between the user equipment and the base station 230 is large, the weight of the user equipment may be frequently calculated. For this reason, the transmission signal from the user equipment may be received by the V-polarized wave surface or the H-polarized wave surface at a satisfactory accuracy in the base station 230.

As described above, in the reception apparatus, the mobile equipment, the communication system, and the communication method according to the embodiment, based on the propagation characteristic, the weight for the beam forming at which the signal received by the reception apparatus is the V-polarized wave surface or the H-polarized wave surface is calculated and notified to the mobile equipment. With this configuration, the signal processing amount in the reception apparatus may be reduced.

According to the above-mentioned embodiment, the case in which the reception apparatus is applied to the base station has been described, but the reception apparatus is not limited to the base station, and it suffices as long as the reception apparatus receives the transmission signal from the mobile equipment. For example, the reception apparatus may also be applied to the relay node for receiving the transmission signal from the mobile equipment and transferring the received transmission signal to the base station.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to an illustration of the superiority and inferiority of the invention embodiments. Although the embodiment(s) of the present inventions have been described in detail, it should be understood that various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

In regard to the embodiments described above, the following additional descriptions are disclosed.

(Additional Note 1)

A reception apparatus including:

a receiver having respective antennas for receiving signals of different respective polarized wave surfaces;
an estimation unit configured to estimate a propagation characteristic between the reception apparatus and a mobile equipment;
a calculation unit configured to calculate at least one of weights of respective beam formings at which the signals received by receiver are the respective polarized wave surfaces based on an estimation result of the estimation unit; and
a transmitter configured to transmit the at least one weight calculated by the calculation unit to the mobile equipment.

(Additional Note 2)

The reception apparatus according to additional note 1, wherein the calculation unit calculates the weights of the respective beam formings, the reception apparatus further including:

a quality calculation unit configured to calculate respective propagation qualities corresponding to the respective weights; and
a selection unit configured to select a weight to be transmitted by the transmitter among the respective weights calculated by the calculation unit based on the respective propagation qualities calculated by the quality calculation unit.

(Additional Note 3)

The reception apparatus according to additional note 1 or additional note 2, wherein the calculation unit multiplies a propagation characteristic estimation value indicating the estimation result of the estimation unit by predetermined plural pre-coding weights and calculates a pre-coding weight at which a multiplication result is closest to one of the respective polarized wave surfaces as the weight.

(Additional Note 4)

The reception apparatus according to any one of additional notes 1 to 3, wherein the estimation unit estimates the propagation characteristic based on a reference signal transmitted from the mobile equipment.

(Additional Note 5)

The reception apparatus according to additional note 4, wherein the calculation unit calculates the weight for every cycle at which the reference signal is transmitted from the mobile equipment.

(Additional Note 6)

The reception apparatus according to additional note 4, wherein the calculation unit calculates a Doppler frequency between the reception apparatus and the mobile equipment based on the estimation result of the estimation unit and calculates the weight for every cycle based on the calculated Doppler frequency.

(Additional Note 7)

The reception apparatus according to additional note 6, wherein as the calculated Doppler frequency is larger, the calculation unit further shortens the cycle for calculating the weight.

(Additional Note 8)

The reception apparatus according to any one of additional notes 1 to 7, further comprising respective schedulers for respectively performing respective schedulings on respective communications by the respective antennas.

(Additional Note 9)

A mobile equipment including:

a transmitter configured to transmit a signal to a reception apparatus having respective antennas for receiving signals of different respective polarized wave surfaces;
a receiver configured to receive a weight for beam forming, at which the signal received by the reception apparatus is one of the respective polarized wave surfaces, from the reception apparatus; and
a multiplication unit configured to perform the beam forming of the signal transmitted by the transmitter by the weight received by the receiver.

(Additional Note 10)

A communication system including:

a reception apparatus provided with respective antennas for receiving signals of different respective polarized wave surfaces, and configured to calculate a weight for beam forming at which the received signal is one of the respective polarized wave surfaces based on a propagation characteristic between the reception apparatus and a mobile equipment and transmit the calculated weight to the mobile equipment; and
a mobile equipment for performing the beam forming on the signal to be transmitted by the weight transmitted by the reception apparatus.

(Additional Note 11)

A communication method for a reception apparatus provided with respective antennas for receiving signals of different respective polarized wave surfaces, the communication method including:

estimating a propagation characteristic between the reception apparatus and a mobile equipment;
calculating at least one of weights for respective beam formings at which the signals received by the reception apparatus are the respective polarized wave surfaces based on an estimation result in the estimating; and
transmitting the weight calculated in the calculating to the mobile equipment.

(Additional Note 12)

A communication method ncluding:

transmitting a signal to a reception apparatus provided with respective antennas for receiving signals of different respective polarized wave surfaces;
receiving a weight for beam forming, at which the signal received by the reception apparatus is one of the respective polarized wave surfaces, from the reception apparatus; and
performing the beam forming on the signal transmitted in the transmitting by the weight received in the receiving.

(Additional Note 13)

A communication method for a reception apparatus provided with respective antennas for receiving signals of different respective polarized wave surfaces and a mobile equipment, the communication method including:

estimating a propagation characteristic between the reception apparatus and the mobile equipment;
calculating a weight for beam forming at which the signal received by the reception apparatus is one of the respective polarized wave surfaces based on an estimation result in the estimating; and
performing the beam forming on the signal transmitted by the mobile equipment by the weight calculated in the calculating.

**Claims**

1.  A reception apparatus comprising:

    a receiver including respective antennas for receiving signals of different respective polarized wave surfaces;
    an estimation unit configured to estimate a propagation characteristic between the reception apparatus and a mobile equipment;
    a calculation unit configured to calculate at least one of weights of respective beam formings at which the signals received by receiver are the respective polarized wave surfaces based on an estimation result of the estimation unit; and
    a transmitter configured to transmit the at least one weight calculated by the calculation unit to the mobile equipment.

2.  The reception apparatus according to Claim 1, wherein the calculation unit calculates the weights of the respective beam formings,
    the reception apparatus further comprising:

    a quality calculation unit configured to calculate respective propagation qualities corresponding to the respective weights; and
    a selection unit configured to select a weight to be transmitted by the transmitter among the respective weights calculated by the calculation unit based on the respective propagation qualities calculated by the quality calculation unit.

3.  The reception apparatus according to Claim 1 or Claim 2, wherein the calculation unit multiplies a propagation characteristic estimation value indicating the estimation result of the estimation unit by predetermined plural pre-coding weights and calculates a pre-coding weight at which a multiplication result is closest to one of the respective polarized wave surfaces as the weight.

4.  The reception apparatus according to any one of Claims 1 to 3, wherein the estimation unit estimates the propagation characteristic based on a reference signal transmitted from the mobile equipment.

5.  The reception apparatus according to Claim 4, wherein the calculation unit calculates the weight for every cycle at which the reference signal is transmitted from the mobile equipment.

6.  The reception apparatus according to Claim 4, wherein the calculation unit calculates a Doppler frequency between the reception apparatus and the mobile equipment based on the estimation result of the estimation unit and calculates the weight for every cycle based on the calculated Doppler frequency.

7.  The reception apparatus according to Claim 6, wherein as the calculated Doppler frequency is larger, the calculation unit further shortens the cycle for calculating the weight.

8.  The reception apparatus according to any one of Claims 1 to 7, further comprising respective schedulers for respectively performing respective schedulings on respective communications by the respective antennas.

9.  A mobile equipment operable to operate as the mobile equipment in any of Claims 1 to 8 and comprising:

    a transmitter configured to transmit a signal to the reception apparatus;
    a receiver configured to receive the at least one of the weights from the reception apparatus; and
    a multiplication unit configured to perform the beam forming of the signal by the at least one of the weights received by the receiver.

10. A communication system comprising:

    a reception apparatus provided with respective antennas for receiving signals of different respective polarized wave surfaces, and configured to calculate a weight for beam forming at which the received signal is one of the respective polarized wave surfaces based on a propagation characteristic between the reception apparatus and a mobile equipment and transmit the calculated weight to the mobile equipment; and
    a mobile equipment for performing the beam forming on the signal to be transmitted by the weight transmitted by the reception apparatus.

**11.** A communication method comprising:

estimating a propagation characteristic between a reception apparatus provided with respective antennas for receiving signals of different respective polarized wave surfaces and a mobile equipment; and
calculating at least one weight for beam forming at which the signal received by the reception apparatus is at least one of the respective polarized wave surfaces based on an estimation result in the estimating.

**12.** The communication method according to Claim 11 further comprising:

transmitting the weight calculated in the calculating to the mobile equipment.

**13.** The communication method according to Claim 11 further comprising:

performing the beam forming on the signal transmitted by the mobile equipment by the weight calculated in the calculating.

**14.** The communication method according to Claim 11 further comprising:

transmitting a signal to the reception apparatus;
receiving the weight calculated in the calculating from the reception apparatus; and
performing the beam forming on the signal by the weight received in the receiving.

**15.** A communication system comprising: the reception apparatus according to any of claims 1 to 8; and the mobile equipment according to claim 9.

FIG. 1

FIG. 2

# FIG. 3

# FIG. 4

# FIG. 5

EP 2 264 915 A2

# FIG. 6

PROPAGATION CHARACTERISTIC
ESTIMATION VALUE

562
CALCULATION UNIT

561
PROPAGATION CHARACTERISTIC
AVERAGING UNIT

611
V-POLARIZED WAVE
WEIGHT CALCULATION UNIT

621
V-POLARIZED WAVE SIR
CALCULATION UNIT

630
POLARIZED
WAVE
SELECTION
UNIT

563
V-POLARIZED WAVE
SCHEDULER

612
H-POLARIZED WAVE
WEIGHT CALCULATION UNIT

622
H-POLARIZED WAVE SIR
CALCULATION UNIT

564
H-POLARIZED WAVE
SCHEDULER

FIG. 7

# FIG. 8

# FIG. 9

PROPAGATION CHARACTERISTIC
ESTIMATION VALUE

562
CALCULATION UNIT

561
PROPAGATION CHARACTERISTIC AVERAGING UNIT

911
PRE-CODING RESPONSE CALCULATION UNIT

912
PRE-CODING RESPONSE CALCULATION UNIT

920
ORTHOGONALITY COMPARISON UNIT

930
PRE-CODING DECISION UNIT

940
SIR CALCULATION UNIT

563
V-POLARIZED WAVE SCHEDULER

564
H-POLARIZED WAVE SCHEDULER

EP 2 264 915 A2

EP 2 264 915 A2

# FIG. 10

# FIG. 11

| Fd | USER EQUIPMENT MOVING SPEED | SELECTION CYCLE BASED ON Fd |
|---|---|---|
| 0~10 [Hz] | 5 [km/h] | 5000 [msec] |
| 10~40 [Hz] | 20 [km/h] | 1250 [msec] |
| 40~120 [Hz] | 60 [km/h] | 400 [msec] |
| 120~240 [Hz] | 120 [km/h] | 200 [msec] |
| 240~600 [Hz] | 300 [km/h] | 80 [msec] |

# FIG. 12

START

OBTAIN FIRST CYCLE INDICATED BY
CYCLE SETTING REQUEST ~S1201

OBTAIN SECOND CYCLE BASED ON
DOPPLER FREQUENCY ~S1202

S1203

FIRST CYCLE > SECOND CYCLE? — NO

YES ~S1204 ~S1205

SET FIRST CYCLE AS SELECTION CYCLE     SET SECOND CYCLE AS SELECTION CYCLE

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004080353 A

- JP 2008124974 A

**Non-patent literature cited in the description**

- **W. Liu ; L. L. Yang ; L. Hanzo.** SVD-Assisted Multiuser Transmitter and Multiuser Detector Design for MIMO Systems. *IEEE Transactions on Vehicular Technology,* February 2009, vol. 58 (2), 1016-1021

- **Shunji Miyazaki ; Kazuhisa Obuchi ; Takaharu Nakamura.** A method of Fading Frequency estimation for W-CDMA Mobile Station. *the Institute of Electronics, Information and Communication Engineers,* September 2002